# EUROPEAN PATENT SPECIFICATION

(11) **EP 2 840 472 B1**
(45) Date of publication and mention of the grant of the patent: **31.07.2019**
(21) Application number: 12874864.7
(22) Date of filing: 25.05.2012
(51) Int. Cl.: G06F 3/048, G06F 3/0483, G06F 3/0346, G06F 1/16, G06F 3/01, G06F 3/0482, G06F 3/0481, H04M 1/725

(54) **MENU LAYOUT PROCESSING METHOD AND APPARATUS**
VERFAHREN UND VORRICHTUNG ZUR VERARBEITUNG VON MENÜLAYOUTS
PROCÉDÉ ET APPAREIL DE TRAITEMENT POUR DISPOSITION DE MENUS

(30) Priority: 20.04.2012 CN 201210119569
(43) Date of publication of application: 25.02.2015
(73) Proprietor: ZTE Corporation, Shenzhen, Guangdong 518057 (CN)
(72) Inventor: DONG, Youwei, Shenzhen Guangdong 518057 (CN)
(74) Representative: Novagraaf Technologies
(86) International application number: PCT/CN2012/076077
(87) International publication number: WO 2013/155756

(56) References cited:
- CN-A- 101 158 889
- CN-C- 100 524 187
- US-A1- 2005 212 760
- US-A1- 2010 070 926
- US-A1- 2010 134 312
- US-A1- 2011 010 659
- US-A1- 2011 131 537
- Anonymous: "How to re-arrange apps automatically ? | Apple iPad Forum", , 15 January 2012 (2012-01-15), XP055185220, Retrieved from the Internet: URL:http://www.ipadforums.net/threads/how- to-re-arrange-apps-automatically.60927/ [retrieved on 2015-04-22]
- Anonymous: "excess screens/pages with none or very few icons on them.", , 16 December 2011 (2011-12-16), XP055185227, Retrieved from the Internet: URL:http://www.galaxyforums.net/forum/gala xy-s2-help/4669-excess-screens-pages-none- very-few-icons-them.html [retrieved on 2015-04-22]

## Description

### Field

The present invention relates to the communication field including, e.g., a method and apparatus for processing menu layout.

### Background

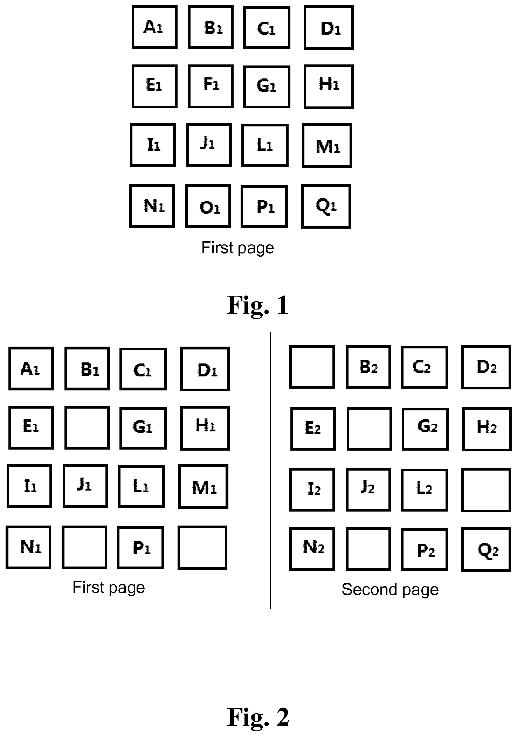

The smart phones have gradually replaced the non-smart phones, becoming the modern mainstream. Various third party applications are running on the smart operating system. Moreover, the interface arrangement of the third party applications made by most systems is paging arrangement, and the application icon arrangement of each page is matrix arrangement. Fig. 1 is a schematic diagram of a menu layout in the related art, as shown in Fig. 1. The user can delete the application on each page randomly according to his own need, and meanwhile the user also can drag the application in the menu layout and place it on the page that he likes. However, such a random dragging and modifying will lead to different page layouts having many defects, thus affecting the visual effect. It needs to drag the icons to an appropriate place one by one again for a beautiful menu layout, this not only consumes time, but also the user cannot determine the icon position accurately when the user himself drags and arranges.

In addition, in this case, if the user intends to look for a certain application, he needs to find this application by way of page turning. Fig. 2 is a schematic diagram of which a user needs to look for an icon on different pages in the related art, as shown in Fig. 2. Most users are used to placing the application icons that he uses often on the first page, then dragging the icons to a certain page one by one, which not only consumes time, but also affects the user experience.

The related document (US2010/134312A1) discloses an input device and method of a portable terminal; the related document (US2010/070926A1) discloses a media system which includes a graphical display that presents an iconic menu and a textual menu; the related document (CN100524187C) discloses a method utilizing dynamic sensing to alternate the icon position; the related document ("How to re-arrange apps automatically?|Apple iPad Forum") discloses re-arrange apps automatically; the related document ("excess screens/pages with none or very few icons on them") discloses icons on excess screens/pages; the related document (US2005/212760A1) discloses a motion controlled handheld device which includes a display having a viewable surface and operable to generate an image and a gesture database maintaining a plurality of gestures.

Therefore, in the related art, the icons need to be dragged one by one by hand when moved, which is time-consuming, cannot determine the arrangement position accurately and affects the user experience.

### Summary

The embodiments of the present invention provide a method and apparatus for processing menu layout, so as to at least solve the problem in the related art that the icons need to be dragged one by one by hand when moved, which is time-consuming, cannot determine the arrangement position accurately and affects the user experience.

The invention is defined by the independent claim 1 and 8. The dependent claims define advantageous embodiments. These and other embodiments are further detailed below. The problem in the related art that the icons need to be dragged one by one by hand when moved which is time-consuming, cannot determine the arrangement position accurately and affects the user experience is solved, thereby improving the user experience effect.

### Brief Description of the Drawings

Drawings, provided for further understanding of the present invention and forming a part of the specification, are used to explain the present invention together with embodiments of the present invention rather than to limit the present invention, wherein:
Fig. 1 is a schematic diagram of a menu layout in the related art;
Fig. 2 is a schematic diagram of which a user needs to look for an icon on different pages in the related art;
Fig. 3 is a flowchart of a method for processing menu layout according to an embodiment of the present invention;
Fig. 4 is a structure diagram of an apparatus for processing menu layout according to an embodiment of the present invention;
Fig. 5 is a structure diagram of an adjusting component 46 in an apparatus for processing menu layout according to an embodiment of the present invention;
Fig. 6 is a structure diagram of an apparatus for processing menu layout according to another embodiment of the present invention;
Fig. 7 is a structure diagram of an apparatus for processing menu layout according to another embodiment of the present invention;
Fig. 8 is a flowchart of adjusting the whole menu layout according to an embodiment of the present invention;
Fig. 9 is a schematic diagram I before the whole menu layout is rearranged according to an embodiment of the present invention;
Fig. 10 is a schematic diagram I after the whole menu layout is rearranged according to an embodiment of the present invention;
Fig. 11 is a schematic diagram II before the whole menu layout is rearranged according to an embodiment of the present invention;
Fig. 12 is a schematic diagram II after the whole menu layout is rearranged according to an embodiment of the present invention;
Fig. 13 is a flowchart of adjusting a menu page according to an embodiment of the present invention;
Fig. 14 is a schematic diagram before a page in a menu layout is rearranged according to an embodiment of the present invention; and
Fig. 15 is a schematic diagram after the whole menu layout is rearranged according to an embodiment of the present invention.

### Detailed Description of the Embodiments

Hereinafter, the present invention will be described in detail with reference to the accompanying drawings and in conjunction with the embodiments. It should be noted that the embodiments of the application and the features of the embodiments can be combined with each other if there is no conflict.

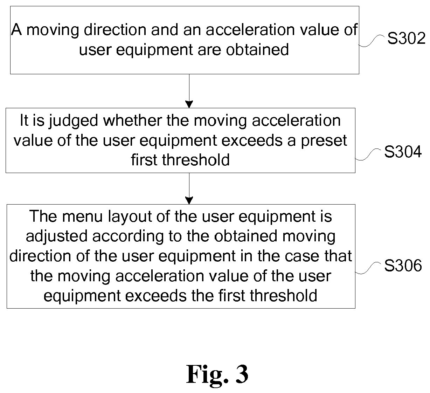

In the embodiment, a method for processing menu layout is provided. Fig. 3 is a flowchart of a method for processing menu layout according to an embodiment of the present invention. As shown in Fig. 3, the flow comprises the following steps:
Step S302: A moving direction and an acceleration value of user equipment are obtained;
Step S304: It is judged whether the moving acceleration value of the user equipment exceeds a preset first threshold; and
Step S306: The menu layout of the user equipment is adjusted according to the obtained moving direction of the user equipment in the case that the moving acceleration value of the user equipment exceeds the first threshold, wherein the menu layout is the arrangement of one or more icons on one or more pages.

From the above steps, it is judged whether the menu layout of the user equipment is rearranged through obtaining the characteristics of the physical movement of the user equipment. Compared to the related art that when the menu layout needs to be arranged, the icons in the menu layout need to be dragged one by one by hand so as to cause operation, it effectively avoids the case that the threshold is set according to the individual, and it is only necessary to simply operate the user equipment physically to achieve the rearrangement of the menu layout. The technical problem of time-consuming adjustment of menu layout and inefficient processing is solved, thereby improving the user experience.

In the case that the adjustment condition set in advance is met, there are many ways by which the menu layout of the user equipment is adjusted. Therefore, the adjusting way needed is set in advance before the adjustment, then the adjusting way by which the menu layout of the user equipment is adjusted is obtained during the adjustment, wherein the adjusting way may comprises at least one of the following ways: filling the icons to left or to right among different pages according to relative positions, moving a selected icon to a specified page among different pages, and filling the icons to a specified direction on the same page. It should be noted that, as to the way of filling the icons to left or to right among different pages according to relative positions, specifically during filling, the icons may be filled only using the icons as a unit, and certainly may be filled using a kind of icons as a unit. The menu layout of the user equipment is adjusted according to the adjusting way obtained above and the obtained moving direction of the user equipment. The selection of adjusting way is flexibly set according to needs and preferences before starting using the above embodiment to adjust the menu layout.

As an embodiment, when the user needs to place the icons that he usually uses or some preferred icons to one fixed page in the menu layout or one specified position in the menu layout, it may be achieved through the following operation: before obtaining the moving direction and the moving acceleration value of the user equipment, receiving information of one or more icons on one or more pages in the menu layout, wherein the information of one or more icons is used for specifying one or more icons moved in the process of adjusting the menu layout. That is, the user may select some icons that he want to move together according to his preferences, then swings the user equipment according to the presetting, thereby efficiently and quickly achieving the rearrangement of the menu layout.

More preferably, when the selected icon is adjusted to the specified position in the menu layout, the specified position may be a position on the page in the menu layout, and certainly may be a folder newly created on the specified page in the menu layouts. It should be noted that adopting this way also needs presetting. It may be achieved in the following way: in the case that the moving acceleration value of the user equipment exceeds the first threshold, creating one folder icon on a pre-specified page; adjusting one or more icons to the folder icon according to the obtained moving direction of the user equipment. It not only achieves the fast and efficient adjustment of the menu layout, but also improves the icon management efficiency.

More preferably, the adjustment time of the menu layout of the user equipment may also be set, wherein different adjustment time may be set according to different people or persons having different needs. However, when it is judged by using what adjustment time that the adjustment of the menu layout is achieved, it may be achieved in the following way: judging whether the moving acceleration value of the user equipment exceeds a preset second threshold; and adjusting the menu layout of the user equipment within predetermined time according to the obtained moving direction of the user equipment in the case that the moving acceleration value of the user equipment exceeds the second threshold. For example, through setting the second threshold for the acceleration of the user equipment, it represents that the adjustment time is less when exceeding the second threshold, i.e., the adjustment is fast, for example, the adjustment is finished within 1s. However, it represents that the adjustment time may be more when not exceeding the second threshold, i.e., the adjustment may be slower. By adopting such a processing way, the user equipment is aimed to a variety of different people according to different settings.

It should be noted that after adjusting the menu layout of the user equipment, the page without the icon may be deleted to achieve that the user equipment effectively saves the resources.

In the embodiment, there is also provided an apparatus for processing menu layout. The apparatus is used for implementing the above embodiments. As used below, term "component" may implement the combination of software and/or hardware of predetermined functions. Although the apparatus described in the following embodiment is preferably implemented in software, it is possible and conceived that hardware, or a combination of software and hardware may be used for implementation.

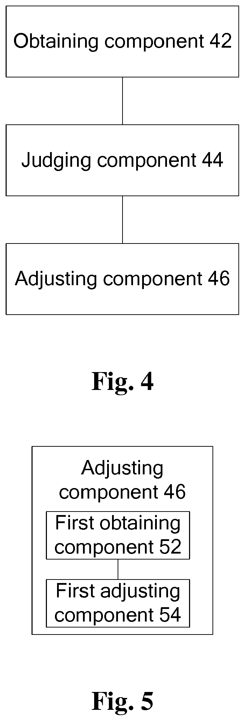

Fig. 4 is a structure diagram of an apparatus for processing menu layout according to an embodiment of the present invention. As shown in Fig. 4, the apparatus comprises an obtaining component 42, a judging component 44 and an adjusting component 46. The obtaining component 42 is configured to obtain a moving direction and a moving acceleration value of user equipment; the judging component 44 is connected to the obtaining component 42 and configured to judge whether the moving acceleration value of the user equipment exceeds a preset first threshold; and the adjusting component 46 is connected to the judging component 44 and configured to adjust the menu layout of the user equipment according to the obtained moving direction of the user equipment in the case that the moving acceleration value of the user equipment exceeds the first threshold, wherein the menu layout above is the arrangement of one or more icons on one or more pages.

Fig. 5 is a structure diagram of an adjusting component 46 in an apparatus for processing menu layout according to an embodiment of the present invention. As shown in Fig. 5, the adjusting component 46 comprises a first obtaining component 52 and a first adjusting component 54.

The first obtaining component 52 is configured to obtain an adjusting way by which the menu layout of the user equipment is adjusted, wherein the adjusting way comprises at least one of the following ways: filling the icons to left or to right among different pages according to relative positions, moving a selected icon to a specified page among different pages, and filling the icons to a specified direction on the same page; and the first adjusting component 54 is connected to the first obtaining component 52 and configured to adjust the menu layout of the user equipment according to the adjusting way above and the obtained moving direction of the user equipment.

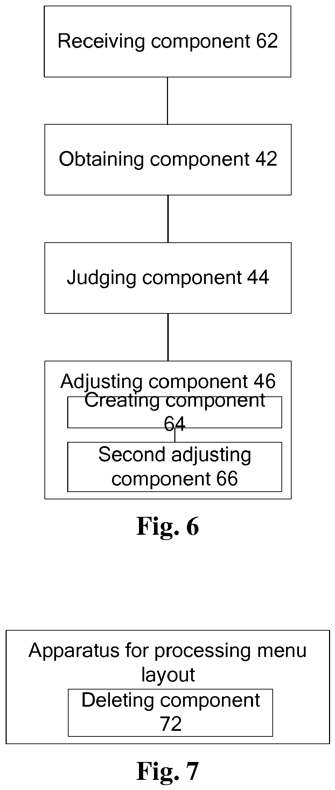

Fig. 6 is a structure diagram of an apparatus for processing menu layout according to an embodiment of the present invention. As shown in Fig. 6, the apparatus, in addition to all of the components as shown in Fig. 4, further comprises a receiving component 62, and the adjusting component 46 as shown in Fig. 4 further comprises a creating component 64 and a second adjusting component 66. The structure of the preferred apparatus for processing menu layout will be described below.

The receiving component 62 is configured to receive information of one or more icons on one or more pages in the menu layout, wherein the information of one or more icons is used for specifying one or more icons moved in the process of adjusting the menu layout.

The creating component 64 is configured to create one folder icon on a pre-specified page; and the second adjusting component 66 is configured to adjust one or more icons to the folder icon according to the obtained moving direction of the user equipment in the case that the moving acceleration value of the user equipment exceeds the first threshold.

Fig. 7 is a structure diagram of an apparatus for processing menu layout according to another embodiment of the present invention. As shown in Fig. 7, the apparatus, in addition to all of the components of the apparatus of any combination as shown in Fig. 4 to Fig. 6, further comprises a deleting component 72, connected to the above adjusting component 46 and configured to, after adjusting the menu layout of the user equipment, delete the page without the icon.

In the embodiment, a menu arrangement method applied to a smart operating system is provided. The problem that the user arranges the menu by hand in the current smart operating system can be solved effectively through the method. Through the method provide by the embodiment, the user only needs to perform a certain operation (the operation is preset in the smart operating system) to directly and quickly rearrange the page icons. The operation is simple to use, and the visual effect is more stunning than previous case, thereby improving the user experience better.

Currently, almost all of the smart operating systems require that the mobile phone should be equipped with an acceleration sensor. For any operation performed by the mobile phone, the acceleration sensor equipped in the mobile phone is able to accurately sense the moving acceleration value characterizing the mobile phone movement. Based on the working principle of the abacus, after the user performs all of the operations, if he wants to calculate again, as long as he picks up the abacus and sways, the abacus returns to the original state. If the working principle of the abacus is applied to the menu arrangement of mobile phone, and based on the technology of configuring the acceleration sensor on the mobile phone, the menu arrangement of mobile phone may also be the same as the abacus, the menu rearrangement can be achieved only by simple operation. Specific implementation is as follows:
The acceleration sensor in the mobile phone can accurately judge the accelerations in all directions. The relationship of the magnitude and direction of the acceleration obtained by the acceleration sensor and the menu arrangement can be preset. For example, the left and right sway of the mobile phone is designed to finish the arrangement of the whole menu, and the up and down sway is designed to finish the menu arrangement of a certain interface. When the user wants to rearrange the layout of the whole menu, after backing to the main menu interface, the user shakes the mobile phone right and left, and the mobile phone judges whether it is need to rearrange through the acceleration value reported by the acceleration sensor. If the acceleration value exceeds the set threshold, the mobile phone will rearrange the whole menu, in an order of from the first page to the last page. The icons in the later pages are filled to the vacant position of the previous page according to the relative position. When the first is fully filled, the second page continues to be filled. If there is no content on the remaining pages after rearrangement, the remaining pages are deleted. When the user only wants to rearrange a certain menu page, he only needs to sway up and down. When the acceleration exceeds the set threshold, the mobile phone rearranges the page, thereby achieving the effect that page menu is laid out orderly. Certainly, there may be multiple acceleration thresholds set. The multiple different acceleration thresholds may represent different sports, for example, the magnitude of the acceleration is set. The menu is rearranged in an acceleration way when exceeding the set magnitude. When the acceleration sensed by the acceleration sensor does not exceed the preset value, the menu is rearranged at normal speed.

Hereinafter, the example of that left and right sway of the mobile phone represents the rearrangement of the whole menu, and the up and down sway of the mobile phone represents the rearrangement of a single page of the mobile phone is illustrated below.

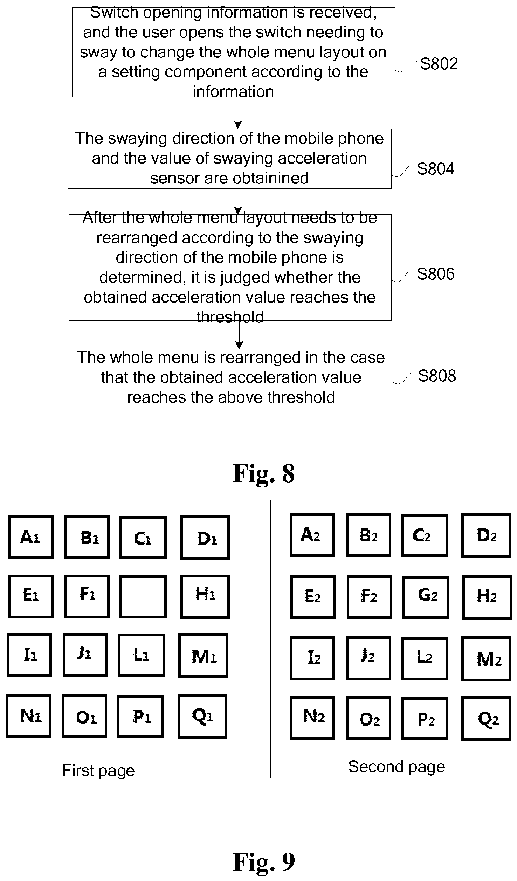

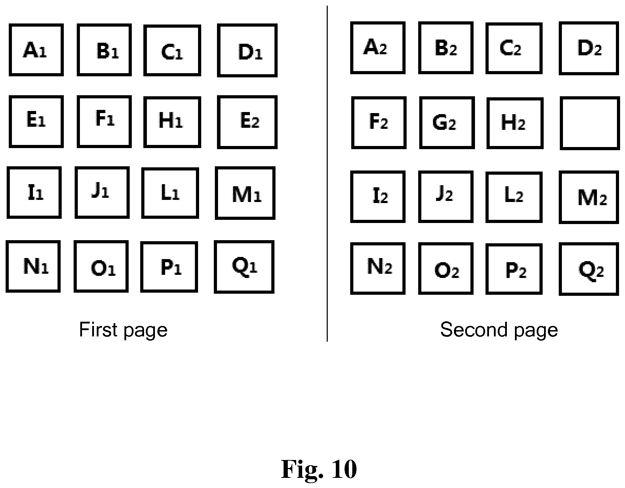

Fig. 8 is a flowchart of adjusting the whole menu layout according to an embodiment of the present invention. As shown in Fig. 8, the flow comprises the following steps:
Step S802: Switch opening information is received, and the switch needing to sway to change the whole menu layout on a setting component according to the information is opened, wherein the setting component presets the rearrangement scope indicated by the sway direction of the mobile phone, and the threshold of the magnitude of the acceleration when the mobile phone sways during menu rearrangement, the threshold may be obtained through experience, and set to avoid the case that slight shaking also changes the layout.
Step S804: The swaying direction of the mobile phone and the value of swaying acceleration sensor are obtained. For example, when the mobile phone user needs to rearrange the menu layout, the mobile phone is backed to the menu interface, and the user shakes the mobile phone right and left. Assumed that such a menu layout has two pages, the there is the case of menu before being rearranged. Fig. 9 is a schematic diagram I before the whole menu layout is rearranged according to an embodiment of the present invention, as shown in Fig. 9.
Step S806: After it is determined that the whole menu layout needs to be rearranged according to the swaying direction of the mobile phone, it is judged whether the obtained acceleration value reaches the threshold.
Step S808: The whole menu is rearranged in the case that the obtained acceleration value reaches the above threshold, and it is ended. Fig. 10 is a schematic diagram I after the whole menu layout is rearranged according to an embodiment of the present invention, as shown in Fig. 10.

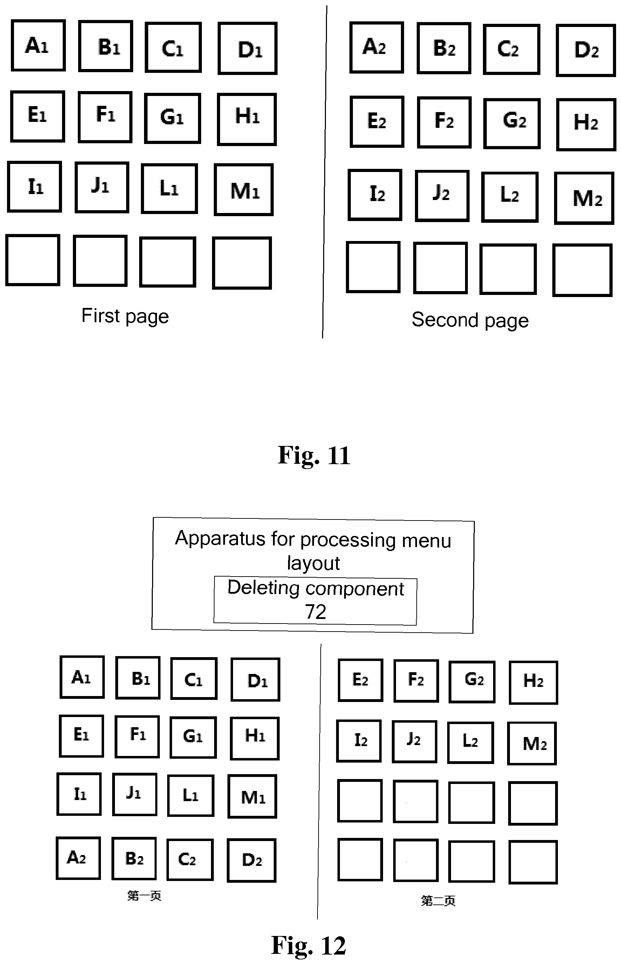

It should be noted that, as for the specific rearrangement principle, it is also possible to perform presetting according to specific needs. A single icon in the page rearranged from Fig. 9 to Fig. 10 described by the above embodiment moves to finish the layout rearrangement. The principle that it follows is to rearrange in a way of filling to one direction (to left) as far as possible in the corresponding row. When the whole row needs to be rearranged in the menu layout, it can be set that the uppermost icons in the next page are filled to the whole row position of the previous page in advance. For example, when the menu layout is as shown in Fig. 11, Fig. 11 is a schematic diagram II before the whole menu layout is rearranged according to an embodiment of the present invention. The layout of the rearranged menu interface is as shown in Fig. 12, Fig. 12 is a schematic diagram II after the whole menu layout is rearranged according to an embodiment of the present invention. It is possible to preset in such an implementation way. Certainly, it may be set in other ways, examples of which are not given one by one herein.

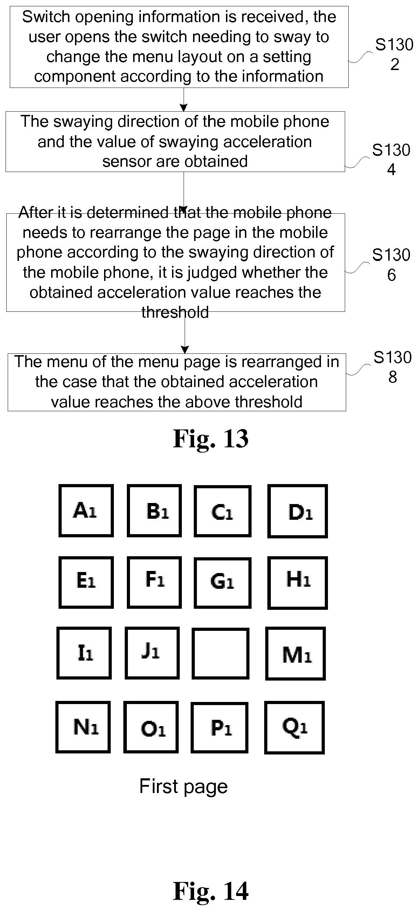

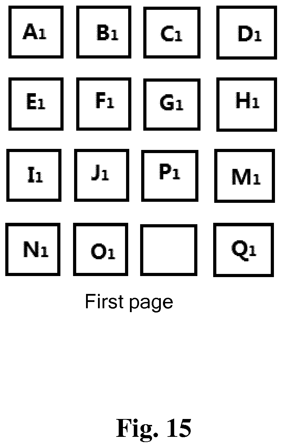

Fig. 13 is a flowchart of adjusting a menu page according to an embodiment of the present invention. As shown in Fig. 13, the process comprises the following steps:
Step S1302: Switch opening information is obtained, and the switch needing to sway to change the menu layout on a setting component according to the information is opened, wherein the setting component presets the rearrangement scope indicated by the sway direction of the mobile phone, and the threshold of the magnitude of the acceleration when the mobile phone sways during menu rearrangement, the threshold may be obtained through experience, and set to avoid the case that slight shaking also changes the layout.
Step S1304: The swaying direction of the mobile phone and the value of swaying acceleration sensor are obtained. For example, when the user needs to rearrange a certain menu page layout, the mobile phone is backed to the menu interface. Assumed that the first page of the menu is rearranged, the mobile phone is swayed up and down. The case before the menu rearrangement is as shown in Fig. 14, Fig. 14 is a schematic diagram before a page in a menu layout is rearranged according to an embodiment of the present invention.
Step S1306: After it is determined that the mobile phone needs to rearrange the page in the mobile phone according to the direction of the mobile phone when swaying, it is judged whether the obtained acceleration value reaches the threshold.
Step S1308: The menu of the menu page is rearranged in the case that the obtained acceleration value reaches the above threshold, and ending. The case after the menu rearrangement is as shown in Fig. 15, Fig. 15 is a schematic diagram after the whole menu layout is rearranged according to an embodiment of the present invention.

Obviously, those skilled in the art shall understand that the above-mentioned components and steps of the present invention can be realized by using general purpose calculating device, can be integrated in one calculating device or distributed on a network which consists of a plurality of calculating devices. Alternatively, the components and the steps of the present invention can be realized by using the executable program code of the calculating device. Consequently, they can be stored in the storing device and executed by the calculating device, and in some cases, the steps shown or described herein can be executed in a sequence different from this presented herein, or they are made into integrated circuit component respectively, or a plurality of components or steps thereof are made into one integrated circuit component. In this way, the present invention is not restricted to any particular hardware and software combination.

The descriptions above are only the embodiments of the present invention, which are not used to restrict the present invention. For those skilled in the art, the present invention may have various changes and variations within the scope of the appended claims.

## Claims

1. A method for processing menu layout, comprising:
obtaining a moving direction and a moving acceleration value of user equipment (S302):
judging whether the moving acceleration value of the user equipment exceeds a preset first threshold (S304); and
wherein the method is **characterized by** further comprising: adjusting the menu layout of the user equipment according to the obtained moving direction of the user equipment in the case that the moving acceleration value of the user equipment exceeds the first threshold, wherein the menu layout is the arrangement of one or more icons on one or more pages (S306);
wherein adjusting the menu layout of the user equipment comprising: when the moving direction of the user equipment is first swaying direction, rearranging one or more icons on a single page of the user equipment; when the moving direction of the user equipment is second swaying direction, rearranging one or more icons on multiple pages of the user equipment.

2. The method according to claim 1, **characterized in that**, adjusting the menu layout of the user equipment according to the obtained moving direction of the user equipment (S306) comprises:
obtaining an adjusting way by which the menu layout of the user equipment is adjusted, wherein the adjusting way comprises at least one of the following ways: filling the one or more icons to left or to right among different pages according to relative positions, moving a selected icon to a specified page among different pages, and filling the one or more icons to a specified direction on the same page; and
adjusting the menu layout of the user equipment according to the adjusting way and the obtained moving direction of the user equipment.

3. The method according to claim 1, **characterized in that**, before obtaining the moving direction and the moving acceleration value of the user equipment (S302), further comprises: receiving information of one or more icons on one or more pages in the menu layout, wherein the information of one or more icons is used for specifying one or more icons moved in the process of adjusting the menu layout.

4. The method according to claim 3, **characterized in that**, adjusting the menu layout of the user equipment according to the obtained moving direction of the user equipment in the case that the moving acceleration value of the user equipment exceeds the first threshold (S306) comprises:
creating one folder icon on a pre-specified page; and
adjusting the one or more icons to the folder icon according to the obtained moving direction of the user equipment in the case that the moving acceleration value of the user equipment exceeds the first threshold.

5. The method according to claim 1, **characterized in that**, adjusting the menu layout of the user equipment according to the obtained moving direction of the user equipment in the case that the moving acceleration value of the user equipment exceeds the first threshold (S306) comprises:
judging whether the moving acceleration value of the user equipment exceeds a preset second threshold; and
adjusting the menu layout of the user equipment within predetermined time according to the obtained moving direction of the user equipment in the case that the moving acceleration value of the user equipment exceeds the second threshold.

6. The method according to claim 1, **characterized in that**, the first swaying direction is caused by up and down swaying of the user equipment and the second swaying direction is caused by left and right swaying of the user equipment.

7. The method according to any one of claims 1 to 6, **characterized in that**, after adjusting the menu layout of the user equipment, further comprises: deleting the pages without the one or more icons.

8. A menu layout processing apparatus, comprising:
an obtaining component (42), configured to obtain a moving direction and a moving acceleration value of user equipment;
a judging component (44), configured to judge whether the moving acceleration value of the user equipment exceeds a preset first threshold; and
wherein the apparatus is **characterized by** further comprising: an adjusting component (46), configured to adjust the menu layout of the user equipment according to the obtained moving direction of the user equipment in the case that the moving acceleration value of the user equipment exceeds the first threshold, wherein the menu layout is the arrangement of one or more icons on one or more pages;
wherein the adjusting component (46) is configured to adjust the menu layout of the user equipment by: when the moving direction of the user equipment is first swaying direction, rearranging one or more icons on a single page of the user equipment; when the moving direction of the user equipment is second swaying direction, rearranging one or more icons on multiple pages of the user equipment.

9. The apparatus according to claim 8, **characterized in that**, the adjusting component comprises:
a first obtaining component (52), configured to obtain an adjusting way by which the menu layout of the user equipment is adjusted, wherein the adjusting way comprises at least one of the following ways: filling the one or more icons to left or to right among different pages according to relative positions, moving a selected icon to a specified page among different pages, and filling the one or more icons to a specified direction on the same page; and
a first adjusting component (54), configured to adjust the menu layout of the user equipment according to the adjusting way and the obtained moving direction of the user equipment.

10. The apparatus according to claim 8, **characterized in that**, the apparatus further comprises: a receiving component (62), configured to receive information of one or more icons on one or more pages in the menu layout, wherein the information of one or more icons is used for specifying one or more icons moved in the process of adjusting the menu layout.

11. The apparatus according to claim 10, **characterized in that**, the adjusting component (46) comprises:
a creating component (64), configured to create one folder icon on a pre-specified page; and
a second adjusting component (66), configured to adjust the one or more icons to the folder icon according to the obtained moving direction of the user equipment in the case that the moving acceleration value of the user equipment exceeds the first threshold.

12. The apparatus according to claim 8, **characterized in that**, the first swaying direction is caused by up and down swaying of the user equipment and the second swaying direction is caused by left and right swaying of the user equipment.

13. The apparatus according to any one of claims 8 to 12, **characterized in that**, the apparatus further comprises: a deleting component (72), configured to, after adjusting the menu layout of the user equipment, delete the pages without the one or more icons.

## Patentansprüche

1. Verfahren zum Verarbeiten eines Menülayouts, umfassend:
Erhalten einer Bewegungsrichtung und eines Bewegungsbeschleunigungswerts von einem Benutzergerät (S302);
Beurteilen, ob der Bewegungsbeschleunigungswert des Benutzergeräts einen voreingestellten ersten Schwellwert (S304) überschreitet; und
wobei das Verfahren **dadurch gekennzeichnet ist, dass** es weiter umfasst: Anpassen des Menülayouts des Benutzergeräts gemäß der erhaltenen Bewegungsrichtung des Benutzergeräts in dem Fall, dass der Bewegungsbeschleunigungswert des Benutzergeräts den ersten Schwellwert überschreitet, wobei das Menülayout die Anordnung von einem oder mehreren Symbolen auf einer oder mehreren Seiten (S306) ist;
wobei das Anpassen des Menülayouts des Benutzergeräts umfasst: wenn die Bewegungsrichtung des Benutzergeräts in eine erste Schwenkrichtung ist, Neuanordnen von einem oder mehreren Symbolen auf einer einzigen Seite des Benutzergeräts; wenn die Bewegungsrichtung des Benutzergeräts eine zweite Schwenkrichtung ist, Neuanordnen von einem oder mehreren Symbolen auf vielfachen Seiten des Benutzergeräts.

2. Verfahren nach Anspruch 1, **dadurch gekennzeichnet, dass** das Anpassen des Menülayouts des Benutzergeräts gemäß der erhaltenen Bewegungsrichtung des Benutzergeräts (S306) umfasst:
Erhalten einer Anpassungsart, durch die das Menülayout des Benutzergeräts angepasst wird, wobei die Anpassungsart mindestens eine der nachstehenden Arten umfasst: Füllen des einen oder der mehreren Symbole nach links oder nach rechts unter verschiedenen Seiten gemäß relativen Positionen, Bewegen eines ausgewählten Symbols auf eine spezifizierte Seite unter verschiedenen Seiten und Füllen des einen oder der mehreren Symbole in eine spezifizierte Richtung auf der gleichen Seite; und
Anpassen des Menülayouts des Benutzergeräts gemäß der Anpassungsart und der erhaltenen Bewegungsrichtung des Benutzergeräts.

3. Verfahren nach Anspruch 1, **dadurch gekennzeichnet, dass** es vor Erhalten der Bewegungsrichtung und des Bewegungsbeschleunigungswerts des Benutzergeräts (S302) weiter umfasst: Empfangen von Informationen von einem oder mehreren Symbolen auf einer oder mehreren Seiten im Menülayout, wobei die Informationen von einem oder mehreren Symbolen zum Spezifizieren von einem oder mehreren Symbolen, die im Prozess des Anpassens des Menülayouts bewegt werden, verwendet werden.

4. Verfahren nach Anspruch 3, **dadurch gekennzeichnet, dass** das Anpassen des Menülayouts des Benutzergeräts gemäß der erhaltenen Bewegungsrichtung des Benutzergeräts in dem Fall, dass der Bewegungsbeschleunigungswert des Benutzergeräts den ersten Schwellwert (S306) überschreitet, umfasst:
Erstellen eines Ordnersymbols auf einer vorab spezifizierten Seite; und
Anpassen von einem oder mehreren Symbolen an das Ordnersymbol gemäß der erhaltenen Bewegungsrichtung des Benutzergeräts in dem Fall, dass der Bewegungsbeschleunigungswert des Benutzergeräts den ersten Schwellwert überschreitet.

5. Verfahren nach Anspruch 1, **dadurch gekennzeichnet, dass** das Anpassen des Menülayouts des Benutzergeräts gemäß der erhaltenen Bewegungsrichtung des Benutzergeräts in dem Fall, dass der Bewegungsbeschleunigungswert des Benutzergeräts den ersten Schwellwert (S306) überschreitet, umfasst:
Beurteilen, ob der Bewegungsbeschleunigungswert des Benutzergeräts einen voreingestellten zweiten Schwellwert überschreitet; und
Anpassen des Menülayouts des Benutzergeräts innerhalb von vorbestimmter Zeit gemäß der erhaltenen Bewegungsrichtung des Benutzergeräts in dem Fall, dass der Bewegungsbeschleunigungswert des Benutzergeräts den zweiten Schwellwert überschreitet.

6. Verfahren nach Anspruch 1, **dadurch gekennzeichnet, dass** die erste Schwenkrichtung durch Aufwärts- und Abwärtsschwenken des Benutzergeräts verursacht wird, und die zweite Schwenkrichtung durch Links- und Rechtsschwenken des Benutzergeräts verursacht wird.

7. Verfahren nach einem der Ansprüche 1 bis 6, **dadurch gekennzeichnet, dass** es nach Anpassen des Menülayouts des Benutzergeräts weiter umfasst: Löschen der Seiten ohne das eine oder die mehreren Symbole.

8. Vorrichtung zum Verarbeiten eines Menülayouts, umfassend:
eine erhaltende Komponente (42), die ausgelegt ist, um eine Bewegungsrichtung und einen Bewegungsbeschleunigungswert von Benutzergeräten zu erhalten;
eine beurteilende Komponente (44), die ausgelegt ist, um zu beurteilen, ob der Bewegungsbeschleunigungswert des Benutzergeräts einen voreingestellten ersten Schwellwert überschreitet; und
wobei die Vorrichtung **dadurch gekennzeichnet ist, dass** sie weiter umfasst: eine anpassende Komponente (46), die ausgelegt ist, um das Menülayout des Benutzergeräts gemäß der erhaltenen Bewegungsrichtung des Benutzergeräts anzupassen, in dem Fall, dass der Bewegungsbeschleunigungswert des Benutzergeräts den ersten Schwellwert überschreitet, wobei das Menülayout die Anordnung von einem oder mehreren Symbolen auf einer oder mehreren Seiten ist;
wobei die anpassende Komponente (46) ausgelegt ist, um das Menülayout des Benutzergeräts anzupassen durch:
wenn die Bewegungsrichtung des Benutzergeräts eine erste Schwenkrichtung ist, Neuanordnen von einem oder mehreren Symbolen auf einer einzigen Seite des Benutzergeräts;
wenn die Bewegungsrichtung des Benutzergeräts eine zweite Schwenkrichtung ist, Neuanordnen von einem oder mehreren Symbolen auf vielfachen Seiten des Benutzergeräts.

9. Vorrichtung nach Anspruch 8, **dadurch gekennzeichnet, dass** die anpassende Komponente umfasst:
eine erste erhaltende Komponente (52), die ausgelegt ist, um eine Anpassungsart zu erhalten, durch die das Menülayout des Benutzergeräts angepasst wird, wobei die Anpassungsart mindestens eine der nachstehenden Arten umfasst: Füllen des einen oder der mehreren Symbole nach links oder nach rechts unter verschiedenen Seiten gemäß relativen Positionen, Bewegen eines ausgewählten Symbols auf eine spezifizierte Seite unter verschiedenen Seiten und Füllen des einen oder der mehreren Symbole in eine spezifizierte Richtung auf der gleichen Seite; und
eine erste anpassende Komponente (54), die ausgelegt ist, um das Menülayout des Benutzergeräts gemäß der Anpassungsart und der erhaltenen Bewegungsrichtung des Benutzergeräts anzupassen.

10. Vorrichtung nach Anspruch 8, **dadurch gekennzeichnet, dass** die Vorrichtung weiter umfasst:
eine empfangende Komponente (62), die ausgelegt ist, um Informationen von einem oder mehreren Symbolen auf einer oder mehreren Seiten im Menülayout zu empfangen, wobei die Informationen von einem oder mehreren Symbolen zum Spezifizieren von einem oder mehreren Symbolen, die im Prozess des Anpassens des Menülayouts bewegt werden, verwendet werden.

11. Vorrichtung nach Anspruch 10, **dadurch gekennzeichnet, dass** die anpassende Komponente (46) umfasst:
eine erstellende Komponente (64), die ausgelegt ist, um ein Ordnersymbol auf einer vorab spezifizierten Seite zu erstellen; und
eine zweite anpassende Komponente (66), die ausgelegt ist, um das eine oder die mehreren Symbole an das Ordnersymbol gemäß der erhaltenen Bewegungsrichtung des Benutzergeräts anzupassen, in dem Fall, dass der Bewegungsbeschleunigungswert des Benutzergeräts den ersten Schwellwert überschreitet.

12. Vorrichtung nach Anspruch 8, **dadurch gekennzeichnet, dass** die erste Schwenkrichtung durch Aufwärts- und Abwärtsschwenken des Benutzergeräts verursacht wird, und die zweite Schwenkrichtung durch Links- und Rechtsschwenken des Benutzergeräts verursacht wird.

13. Vorrichtung nach einem der Ansprüche 8 bis 12, **dadurch gekennzeichnet, dass** die Vorrichtung weiter umfasst: eine löschende Komponente (72), die ausgelegt ist, um nach Anpassen des Menülayouts des Benutzergeräts die Seiten ohne das eine oder die mehreren Symbole zu löschen.

## Revendications

1. Procédé de traitement pour disposition de menus, comprenant :
l'obtention d'un sens de déplacement et d'une valeur d'accélération de déplacement d'un équipement d'utilisateur (S302) ;
le fait d'estimer si la valeur d'accélération de déplacement de l'équipement d'utilisateur dépasse ou pas un premier seuil prédéfini (S304) ; et
dans lequel le procédé est **caractérisé en ce qu'**il comprend en outre : l'ajustement de la disposition de menus de l'équipement d'utilisateur selon le sens de déplacement de l'équipement d'utilisateur dans le cas où la valeur d'accélération de déplacement de l'équipement d'utilisateur dépasse le premier seuil, dans lequel la disposition de menus est l'agencement d'une ou de plusieurs icônes sur une ou plusieurs pages (S306) ;
dans lequel l'ajustement de la disposition de menus de l'équipement d'utilisateur comprend : lorsque le sens de déplacement de l'équipement d'utilisateur est un premier sens d'oscillation, le réagencement d'une ou de plusieurs icônes sur une seule page de l'équipement d'utilisateur ; lorsque le sens de déplacement de l'équipement d'utilisateur est un second sens d'oscillation, le réagencement d'une ou de plusieurs icônes sur de multiples pages de l'équipement d'utilisateur.

2. Procédé selon la revendication 1, **caractérisé en ce que** l'ajustement de la disposition de menus de l'équipement d'utilisateur selon le sens de déplacement obtenu de l'équipement d'utilisateur (S306) comprend :
l'obtention d'une manière d'ajuster grâce à laquelle la disposition de menus de l'équipement d'utilisateur est ajustée, dans lequel la manière d'ajuster comprend au moins un des manières suivantes :
l'insertion des une ou plusieurs icônes vers la gauche ou la droite entre différentes pages selon des positions relatives, le déplacement d'une icône sélectionnée vers une page spécifiée entre différentes pages, et l'insertion des une ou plusieurs icônes dans un sens spécifié sur la même page ; et
l'ajustement de la disposition de menus de l'équipement d'utilisateur selon la manière d'ajuster et le sens de déplacement obtenu de l'équipement d'utilisateur.

3. Procédé selon la revendication 1, **caractérisé en ce qu'**il comprend en outre, avant obtention du sens de déplacement et de la valeur d'accélération de déplacement de l'équipement d'utilisateur (S302) : la réception d'informations d'une ou de plusieurs icônes sur une ou plusieurs pages dans la disposition de menus, dans lequel les informations d'une ou de plusieurs icônes sont utilisées pour spécifier une ou plusieurs icônes déplacées dans le processus d'ajustement de la disposition de menus.

4. Procédé selon la revendication 3, **caractérisé en ce que** l'ajustement de la disposition de menus de l'équipement d'utilisateur selon la direction de déplacement obtenue de l'équipement d'utilisateur dans le cas où la valeur d'accélération de déplacement de l'équipement d'utilisateur dépasse le premier seuil (S306) comprend :
la création d'une icône de dossier sur une page prédéterminée ; et
l'ajustement des une ou plusieurs icônes par rapport à l'icône de dossier selon le sens de déplacement obtenu de l'équipement d'utilisateur dans le cas où la valeur d'accélération de déplacement de l'équipement d'utilisateur dépasse le premier seuil.

5. Procédé selon la revendication 1, **caractérisé en ce que** l'ajustement de la disposition de menus de l'équipement d'utilisateur selon le sens de déplacement obtenu de l'équipement d'utilisateur dans le cas où la valeur d'accélération de déplacement de l'équipement d'utilisateur dépasse le premier seuil (S306) comprend :
le fait d'estimer si la valeur d'accélération de déplacement de l'équipement d'utilisateur dépasse ou pas un second seuil prédéfini ; et
l'ajustement de la disposition de menus de l'équipement d'utilisateur dans un temps prédéterminé selon le sens de déplacement obtenu de l'équipement d'utilisateur dans le cas où la valeur d'accélération de déplacement de l'équipement d'utilisateur dépasse le second seuil.

6. Procédé selon la revendication 1, **caractérisé en ce que** le premier sens d'oscillation est provoqué par une oscillation vers le haut et le bas de l'équipement d'utilisateur et le second sens d'oscillation est provoqué par une oscillation vers la gauche et la droite de l'équipement d'utilisateur.

7. Procédé selon l'une quelconque des revendications 1 à 6, **caractérisé en ce qu'**il comprend en outre, après ajustement de la disposition de menus de l'équipement d'utilisateur : l'effacement des pages sans les une ou plusieurs icônes.

8. Appareil de traitement pour disposition de menus, comprenant :
une composante d'obtention (42), configurée pour obtenir un sens de déplacement et une valeur d'accélération de déplacement de l'équipement d'utilisateur ;
une composante d'estimation (44), configurée pour estimer si la valeur d'accélération de déplacement de l'équipement d'utilisateur dépasse un premier seuil prédéfini ou pas ; et
dans lequel l'appareil est **caractérisé en ce qu'**il comprend en outre : une composante d'ajustement (46), configurée pour ajuster la disposition de menus de l'équipement d'utilisateur selon la direction de déplacement obtenue de l'équipement d'utilisateur dans le cas où la valeur d'accélération de déplacement de l'équipement d'utilisateur dépasse le premier seuil, dans lequel la disposition de menus est l'agencement d'une ou de plusieurs icônes sur une ou plusieurs pages ;
dans lequel la composante d'ajustement (46) est configurée pour ajuster la disposition de menus de l'équipement d'utilisateur par : le réagencement, lorsque le sens de déplacement de l'équipement d'utilisateur est un premier sens d'oscillation, d'une ou de plusieurs icônes sur une seule page de l'équipement d'utilisateur ; le réagencement, lorsque le sens de déplacement de l'équipement d'utilisateur est le second sens d'oscillation, d'une ou de plusieurs icônes sur de multiples pages de l'équipement d'utilisateur.

9. Appareil selon la revendication 8, **caractérisé en ce que** la composante d'ajustement comprend :
une première composante d'obtention (52), configurée pour obtenir une manière d'ajuster grâce à laquelle la disposition de menus de l'équipement d'utilisateur est ajustée, dans lequel la manière d'ajuster comprend au moins une des manières suivantes :
l'insertion des une ou plusieurs icônes vers la gauche ou la droite entre différentes pages selon des positions relatives, le déplacement d'une icône sélectionnée vers une page spécifiée entre différentes pages, et l'insertion des une ou plusieurs icônes dans un sens spécifié sur la même page ; et
une première composante d'ajustement (54), configurée pour ajuster la disposition de menus de l'équipement d'utilisateur selon la manière d'ajuster et le sens de déplacement obtenu de l'équipement d'utilisateur.

10. Appareil selon la revendication 8, **caractérisé en ce que** l'appareil comprend en outre : une composante de réception (62), configurée pour recevoir des informations d'une ou de plusieurs icônes sur une ou plusieurs pages dans la disposition de menus, dans lequel les informations d'une ou de plusieurs icônes sont utilisées pour spécifier une ou plusieurs icônes déplacées dans le processus d'ajustement de la disposition de menus.

11. Appareil selon la revendication 10, **caractérisé en ce que** la composante d'ajustement (46) comprend :
une composante de création (64), configurée pour créer une icône de dossier sur une page prédéterminée ; et
une seconde composante d'ajustement (66), configurée pour ajuster les une ou plusieurs icônes par rapport à l'icône de dossier selon le sens de déplacement obtenu de l'équipement d'utilisateur dans le cas où la valeur d'accélération de déplacement de l'équipement d'utilisateur dépasse le premier seuil.

12. Appareil selon la revendication 8, **caractérisé en ce que** le premier sens d'oscillation est provoqué par une oscillation vers le haut et le bas de l'équipement d'utilisateur et le second sens d'oscillation est provoqué par une oscillation vers la gauche et la droite de l'équipement d'utilisateur.

13. Appareil selon l'une quelconque des revendications 8 à 12, **caractérisé en ce que** l'appareil comprend en outre : une composante d'effacement (72) configurée pour effacer, après ajustement de la disposition de menus de l'équipement d'utilisateur, les pages sans les une ou plusieurs icônes.
